(19) Europäisches Patentamt
European Patent Office
Office européen des brevets

(11) EP 3 617 005 A1

(12) EUROPEAN PATENT APPLICATION

(43) Date of publication:
04.03.2020 Bulletin 2020/10

(51) Int Cl.:
B60R 16/027 (2006.01)     B60R 16/02 (2006.01)
H02G 11/00 (2006.01)

(21) Application number: 19188224.0

(22) Date of filing: 25.07.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 29.08.2018   JP 2018160843

(71) Applicant: YAZAKI CORPORATION
Minato-ku,
Tokyo (JP)

(72) Inventors:
• TOMOSADA, Kosuke
  Susono-shi, Shizuoka (JP)
• KOGURE, Naoto
  Susono-shi, Shizuoka (JP)

(74) Representative: Grünecker Patent- und
Rechtsanwälte
PartG mbB
Leopoldstraße 4
80802 München (DE)

(54) **WIRE HARNESS WITH EXTERIOR BODY AND WIRING STRUCTURE THEREOF**

(57)     A wire harness (WH, WH-2) with an exterior body including:
electric wires (51) assemblies formed by electric wires (51) as electric wire bundles (52), obtained by repeatedly bending the electric wires, and dividing the electric wires into a plurality of groups and bundling each group, in at least a part of the bent section; and
a hollow tubular exterior body (50) having an accommodation space (50a) which accommodates the bent section of the electric wires (51) assemblies, and having a flexibility which is bendable in the horizontal direction, wherein when an inner width dimension of an accommodation area (50b) of the electric wire bundles (52) is defined as A, and the smallest diameter among the outer diameters of the electric wire bundles (52) is defined as B, in a cross section orthogonal to a longitudinal direction of the accommodation space (50a) of the exterior body (50), A and B satisfy the relationship B > (A / 2).

FIG. 4

**Description**

CROSS REFERENCE TO RELATED APPLICATIONS

This application is based on and claims priority from Japanese patent application No. 2018-160843 filed on August 29, 2018, the entire contents of which are incorporated herein by reference.

BACKGROUND OF THE INVENTION

1. TECHNICAL FIELD

The present invention relates to, for example, a wire harness with an exterior body which electrically connects a vehicle body (body) side and a slide door side of an automobile which opens/closes an entrance (opening portion), and a wiring structure thereof.

2. BACKGROUND ART

Patent document 1 discloses a wiring structure of a wire harness for a slide door which electrically connects a holding portion on a body side and a holding portion on a slide door side of a vehicle while displacing a curved portion of a flexible portion according to an opening/closing operation of the slide door. In this type of wire harness, in many cases, an exterior body for protection is provided at a bent portion of the wire harness. Examples of the exterior body include a corrugated tube having a bellows shape, for example.

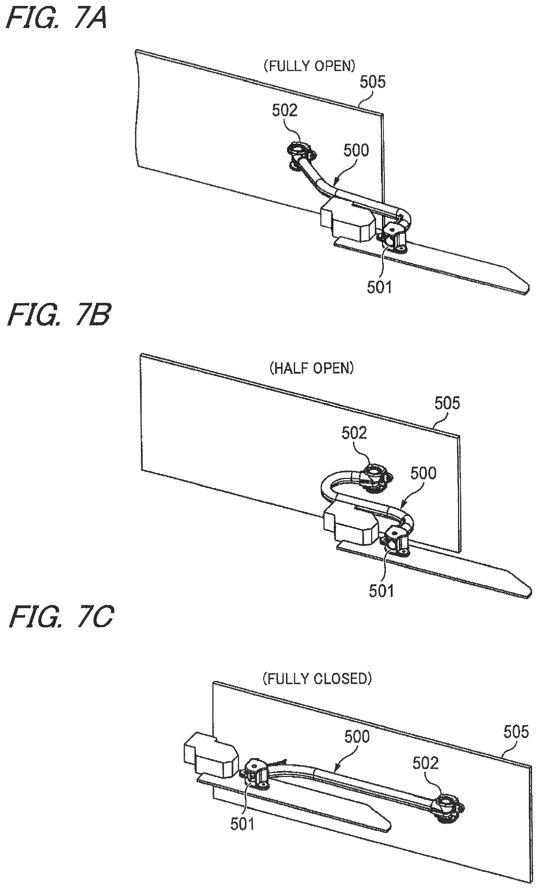

Figs. 7A to 7C are a perspective view showing a behavior of a wire harness with an exterior body wired in a sliding door type entrance of an automobile, which is described in Patent document 1. Fig. 7A shows a state when the slide door is fully opened, Fig. 7B shows a state when the slide door is half opened, and Fig. 7C shows a state when the slide door is fully closed.

As shown in Figs. 7A to 7C, one end of a wire harness with an exterior body 500 is connected to a holding portion 501 on a vehicle body side, and the other end thereof is connected to a holding portion 502 on the slide door side. When a slide door 505 moves from a fully open position (a position of Fig. 7A) to a fully closed position (a position of Fig. 7C), or conversely, when the slide door 505 is moved from the fully closed position (the position of Fig. 7C) to the fully open position (the position of Fig. 7A), the wire harness with an exterior body 500 is bent in a horizontal surface to follow the movement of the slide door 505.

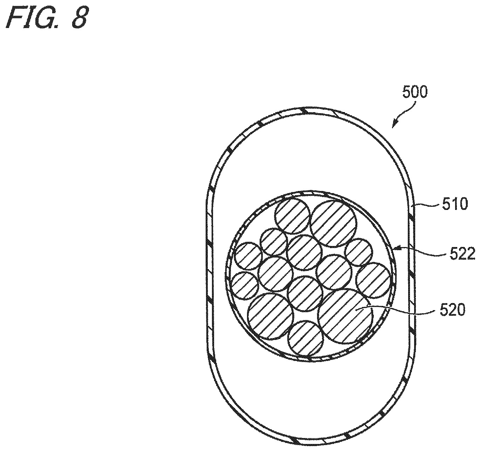

Fig. 8 is a sectional view showing an example of a bent portion of the wire harness with an exterior body 500. The wire harness with an exterior body 500 accommodates one electric wire bundle 522 in which a plurality of electric wires 520 are bundled together in an accommodation space of a hollow tubular exterior body 510.

[Prior Art Documents]

[Patent documents]

[Patent document 1] Japanese Patent No. 6216629

SUMMARY

However, since a diameter of the electric wire bundle 522 in which the plurality of electric wires 520 are bundled together as described above is large, the electric wire bundle 522 is inferior in a flexibility and a bendability. Therefore, there is a possibility that a bending performance of the wire harness with an exterior body 500 configured by accommodating the electric wire bundle 522 in the exterior body 510 is not high.

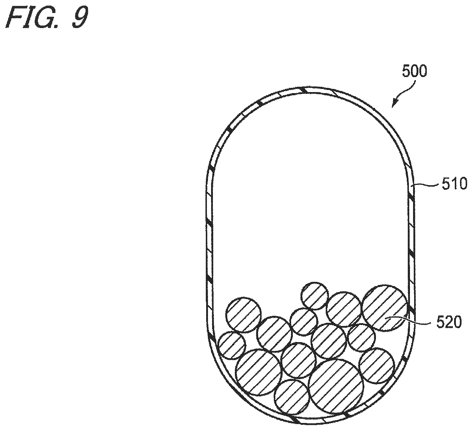

Therefore, as shown in Fig. 9, it is conceivable that the electric wires 520 are accommodated in the exterior body 510 in a loose manner without being bundled. In this case, although the flexibility and the bendability of each of the electric wires 520 are secured, the electric wires 520 are densely concentrated at a lower end side of the accommodation space of the exterior body 510 due to its own weight. Therefore, there is a possibility that the electric wires become difficult to move due to entanglement or interference of the electric wires, and a bending durability is reduced.

The present invention has been made in view of the above circumstances, and an object of the present invention is to provide a wire harness with an exterior body and a wiring structure thereof, in which electric wires can be suppressed be densely concentrated in the exterior body and a bending durability can be improved.

In order to achieve the above object, the wire harness with an exterior body and the wiring structure thereof according to the present invention are characterized by the following (1) to (3).

(1) A wire harness with an exterior body comprising:

a plurality of electric wires assemblies, which are formed by a plurality of electric wires as a plurality of electric wire bundles, obtained by repeatedly bending at least a part of the electric wires in a length direction in a predetermined direction, and dividing the plurality of electric wires into a plurality of groups and bundling each group, in at least a part of the bent section; and a hollow tubular exterior body having an accommodation space which accommodates at least the bent section of the plurality of electric wires assemblies, and having a flexibility which is bendable in the predetermined direction, wherein when an inner width dimension in the predetermined direction of an accommodation area of the electric wire bundles is defined as A, and the smallest diameter among the outer diameters of the plurality of electric wire bundles is defined as B, in a cross section orthogonal to a longitudinal direction of the accommodation space of the exterior body, A and B satisfy the following relationship

$$B > (A / 2).$$

(2) The wire harness with an exterior body according to above (1),
wherein in the accommodation area of the electric wire bundles in the accommodation space, a single electric wire is further accommodated, and when an outer diameter of the single electric wire is defined as C, and the largest diameter among the outer diameters of the plurality of electric wire bundles is defined as D, the following relationship is satisfied

$$C < (A - D).$$

(3) A wiring structure for a wire harness with an exterior body,
wherein one end of the wire harness with an exterior body according to above (1) or (2) in the longitudinal direction is connected to a holding portion on a body side of a vehicle, and the other end thereof is connected to a holding portion on a slide door side which opens/closes an opening portion of the vehicle.

According to the wire harness with an exterior body having the above configuration (1), in the accommodation area of the electric wire bundles in the accommodation space of the exterior body, the two electric wire bundles are not arranged side by side in a horizontal direction which is a bent direction. For example, a width in a case where the two electric wire bundles having the same minimum diameter B are arranged side by side in the horizontal direction is 2B. In contrast, the inner width dimension A of the accommodation area of the electric wire bundles in the accommodation space of the exterior body is smaller than 2B. Therefore, in the accommodation area, the two electric wire bundles having the smallest diameter B cannot be arranged side by side. In addition, other electric wire bundles having a larger diameter cannot be arranged side by side. That is, regardless of a size of the diameter, the two electric wire bundles are not arranged side by side in the horizontal direction. Therefore, even if the electric wire bundles are concentrated in a lower area due to its own weight, the electric wire bundles are not arranged side by side but are arranged in a vertical direction so as to be piled up. When the exterior body is bent in the horizontal direction, the electric wire bundle and the electric wire bundle are not entangled with each other, so that a bending resistance is not increased. In a case where the two electric wire bundles are arranged side by side, the electric wire bundle and the electric wire bundle may rub against each other at the time of bending, and a sliding resistance may increase due to friction, but such a problem is suppressed. In addition, since the diameter of each electric wire bundle is reduced, a degree of freedom of the electric wire in the exterior body is increased. As a result, densely concentrate of electric wires in the exterior body can be avoided, the electric wires are easily bent, and a bending durability is improved. Since the electric wire bundles are stacked in the exterior body, an inner dimension of the exterior body can also be reduced. In addition, since the electric wires can be accommodated in the exterior body in a unit of the electric wire bundles instead of being accommodated in a loose manner, a work of passing the electric wires through the inside of the exterior body can be facilitated.

According to the wire harness with an exterior body having the above configuration (2), even when the unbundled single electric wire is mixed with the electric wire assemblies, a bendability of the single electric wire can be kept good.

According to the wiring structure of the wire harness with an exterior body having the above configuration (3), it is possible to improve the bending durability of the wire harness with an exterior body wired between the body and the slide door.

According to the present invention, the electric wires can be suppressed be densely concentrated in the exterior body, and the bending durability can be improved.

The present invention has been briefly described above. Further, the details of the present invention will be further clarified by reading a mode (hereinafter, referred to as an "embodiment") for carrying out the invention described below with reference to the accompanying drawings.

BRIEF DESCRIPTION OF THE DRAWINGS

Fig. 1 is a perspective view of a wiring structure of a wire harness with an exterior body according to an embodiment of the present invention as viewed from below.
Fig. 2 is a sectional view taken along a line V-V of Fig. 1.
Fig. 3 is a schematic plan views of the wiring structure of the wire harness with an exterior body according to the embodiment, wherein a position (a) shows a state when a slide door is fully opened, a position (b) shows a state when the slide door is half opened, and a position (c) shows a state when the slide door is fully closed.
Fig. 4 is a schematic sectional view of the wire harness with an exterior body according to the embodiment corresponding to a cross section taken along a line W-W of Fig. 3.

Fig. 5 is a sectional view of a comparative example shown for comparison with that shown in Fig. 4, and shows a predicted state of a behavior in a case where electric wires are accommodated in an exterior body in a loose manner without being bundled as an electric wire bundle.

Fig. 6 is a sectional view showing a schematic configuration of a wire harness with an exterior body according to another embodiment of the present invention.

Figs. 7A to 7C are perspective views showing a wiring structure of a conventional wire harness with an exterior body, wherein Fig. 7A shows a state when a slide door is fully opened, Fig. 7B shows a state when the slide door is half opened, and Fig. 7C shows a state when the slide door is fully closed.

Fig. 8 is a sectional view of the conventional wire harness with an exterior body.

Fig. 9 is a view showing a predicted state of a behavior in a case where electric wires are accommodated in an exterior body of the conventional wire harness with an exterior body in a loose manner.

DETAILED DESCRIPTION OF EMBODIMENTS

A specific embodiment of the present invention will be described below with reference to the drawings.

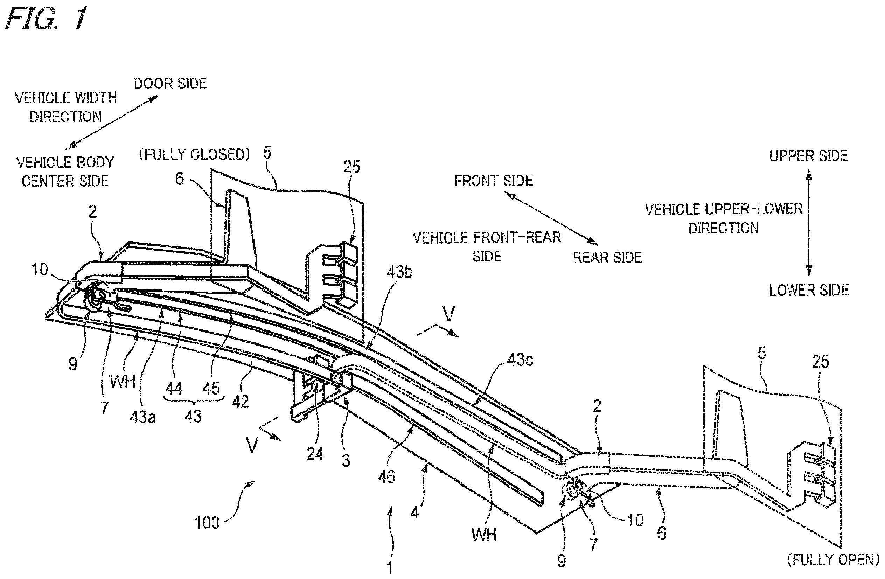

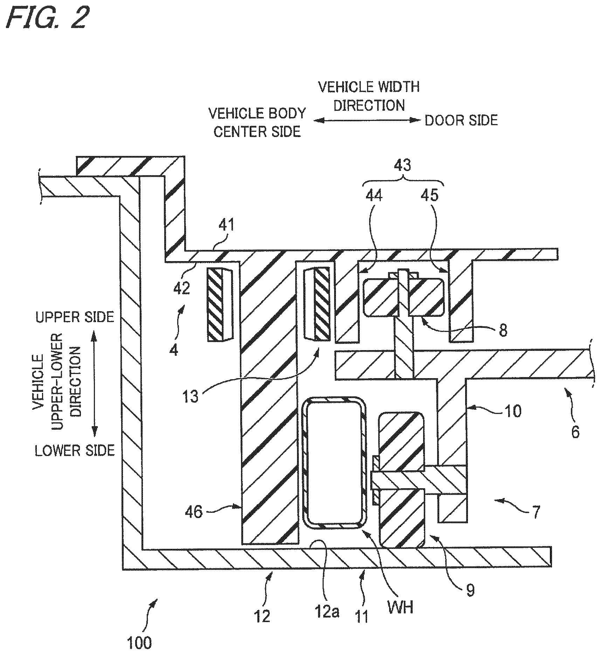

Fig. 1 is a perspective view of a wiring structure of a wire harness with an exterior body according to an embodiment of the present invention as viewed from below. Fig. 2 is a sectional view taken along a line V-V of Fig. 1.

As shown in Fig. 1, a wiring structure 1 for a slide door according to the present embodiment includes a wire harness with an exterior body (hereinafter, also simply referred to as a "wire harness") WH, a holding portion 2 on a door side, a holding portion 3 on a vehicle body (body) side, and a partition wall 46.

The wire harness WH is disposed on a step member 4 of a vehicle 100. The step member 4 is disposed on an opening portion of the vehicle 100. The opening portion is an entrance provided on a vehicle body, and is opened/closed by a slide door 5. The step member 4 is disposed at a lower end portion of the opening portion, and is fixed to, for example, a body panel 12 (Fig. 2) on a vehicle body side of the vehicle 100. In Fig. 1, a solid line indicates a state when the slide door 5 is fully closed, and a two-dot chain line indicates a state when the slide door 5 is fully opened.

In the following description, in the step member 4, a surface on an upper side of the vehicle is a front surface 41 and a surface on a lower side of the vehicle is a back surface 42. The wire harness WH is disposed on a back surface 42 side (lower side) of the step member 4. A step-side guide portion 43 is provided on the back surface 42 of the step member 4. The step-side guide portion 43 guides a slide portion 7 disposed on a lower arm 6 of the slide door 5. The lower arm 6 is an arm fixed to a lower portion of the slide door 5. The slide portion 7 is provided at a tip end portion of the lower arm 6 on a vehicle body center side.

As shown in Fig. 2, the slide portion 7 includes a first roller 8, a second roller 9, and a support portion 10. The support portion 10 is provided at the tip end portion of the lower arm 6 on the vehicle body center side. The first roller 8 is disposed on a vehicle upper side of the support portion 10. The first roller 8 is supported by the support portion 10 so as to be rotatable about a rotation axis in a vehicle upper-lower direction. The second roller 9 is disposed on a vehicle lower side of the support portion 10. The second roller 9 is supported by the support portion 10 so as to be rotatable about a rotation axis in a vehicle width direction.

The step-side guide portion 43 protrudes from the back surface 42 of the step member 4 toward the vehicle lower side. The step-side guide portion 43 includes a pair of wall portions 44, 45 facing each other, and is formed integrally with a main body of the step member 4. The first wall portion 44 is positioned closer to the vehicle body center side than the second wall portion 45 in the vehicle width direction. As shown in Fig. 1, the step-side guide portion 43 extends along a vehicle front-rear direction, and is provided from a front end to a rear end of the step member 4.

The step-side guide portion 43 has a first straight line portion 43a, a curved portion 43b, and a second straight line portion 43c. The curved portion 43b connects the first straight line portion 43a positioned on a front side and the second straight line portion 43c positioned on a rear side. The first straight line portion 43a is inclined with respect to the vehicle front-rear direction toward the vehicle body center side as it goes to the vehicle front side. As described above, since the first straight line portion 43a is inclined, the slide door 5 moves toward the vehicle body center side as it goes to the vehicle front side, and closes the opening portion of the vehicle body. The curved portion 43b when viewed from the vehicle upper side has a curved shape projecting toward a door side in the vehicle width direction.

As shown in Fig. 2, the first roller 8 is disposed in a space portion between the first wall portion 44 and the second wall portion 45 of the step-side guide portion 43. The first roller 8 is guided by the step-side guide portion 43 to slide the slide door 5 along a predetermined trajectory.

The partition wall 46 is provided closer to the vehicle body center side than the step-side guide portion 43. The partition wall 46 is a rib-like wall portion protruding from the back surface 42 of the step member 4 toward the vehicle lower side. The partition wall 46 is formed integrally with the main body of the step member 4. The partition wall 46 is provided along the step-side guide portion 43 from the front end to the rear end of the step member 4. A passage of a belt 13 is formed between the partition wall 46 and the first wall portion 44.

The belt 13 is an endless belt made of rubber or the like. The belt 13 is disposed so as to surround the partition wall 46. Protrusions are formed at equal intervals on an inner peripheral surface of the looped belt 13. The slide portion 7 is connected to the belt 13, and is driven by a rotational movement of the belt 13 to move in the vehicle front-rear direction. A motor (not shown) is disposed on a front surface 41 side of the step member 4. The belt 13 is connected to the motor via a sprocket or the like, and is driven and rotated by the motor.

As shown in Fig. 2, the body panel 12 is positioned closer to the vehicle lower side than the step member 4. The body panel 12 has a support surface 12a facing the back surface 42 of the step member 4. The body panel 12 is fixed to the vehicle body, and supports the second roller 9 from below. That is, the second roller 9 moves in the vehicle front-rear direction while rolling on the support surface 12a of the body panel 12, and is guided by the support surface 12a. The body panel 12 and the step-side guide portion 43 form a guide portion 11 which guides the slide portion 7.

The wire harness WH electrically connects the vehicle body side of the vehicle 100 and the slide door 5. One end of the wire harness WH in the longitudinal direction is connected to the holding portion 3 on the body side of the vehicle, and the other end thereof is connected to the holding portion 2 on the slide door side which opens/closes the opening portion of the vehicle.

Next, the wire harness with an exterior body will be described in detail.

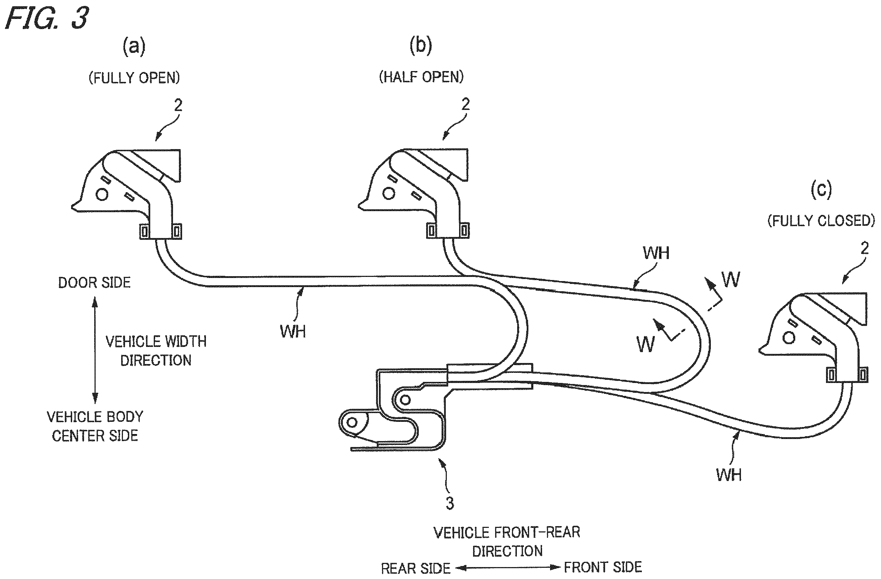

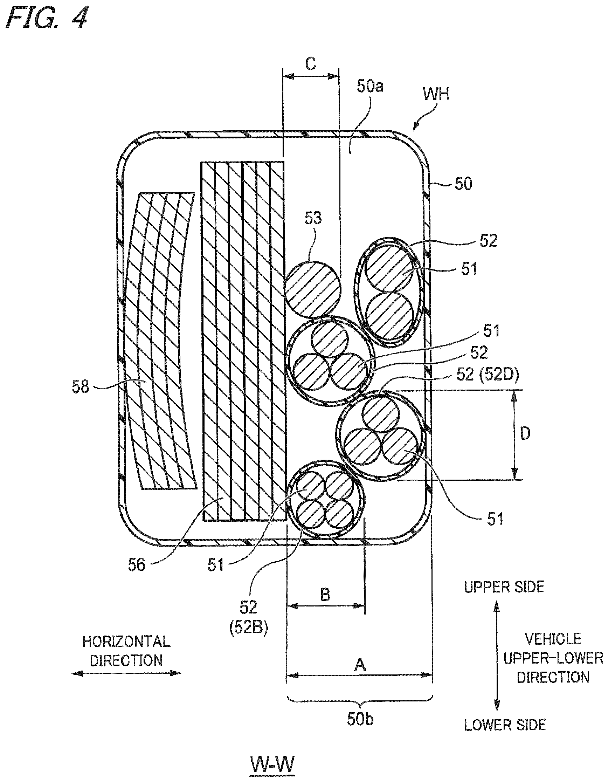

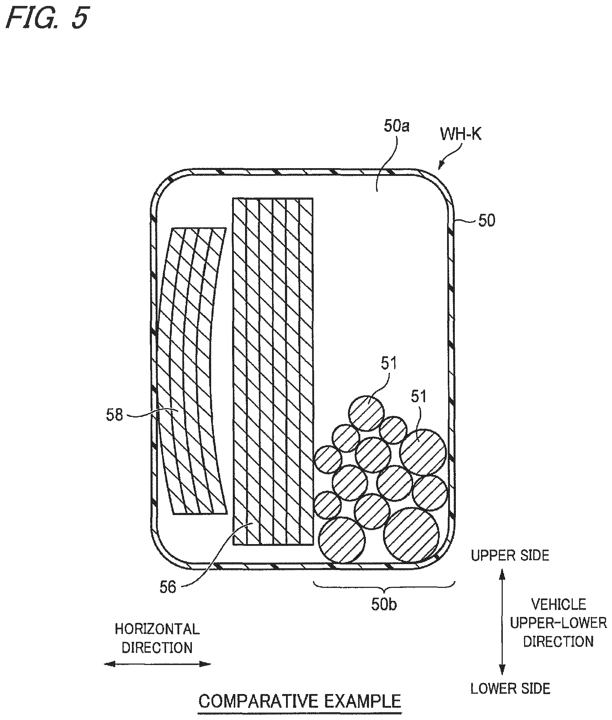

Fig. 3 is a schematic plan view of the wiring structure of the wire harness with an exterior body according to the embodiment, wherein a position (a) shows a state when the slide door is fully opened, a position (b) shows a state when the slide door is half opened, and a position (c) shows a state when the slide door is fully closed. Fig. 4 is a schematic sectional view of the wire harness with an exterior body according to the present embodiment corresponding to a cross section taken along a line W-W of Fig. 3. Fig. 5 is a sectional view of a comparative example shown for comparison with that shown in Fig. 4, and shows a predicted state of a behavior in a case where electric wires are accommodated in an exterior body in a loose manner without being bundled as an electric wire bundle.

As shown in Fig. 3, when the slide door moves from a fully open position (a position (a)) to a fully closed position (a position (c)), or conversely, when the slide door moves from the fully closed position (the position (c)) to the fully open position (the position (a)), the wire harness WH is bent in a horizontal surface to follow the movement of the slide door.

As shown in the cross section in Fig. 4, the wire harness WH includes a hollow tubular exterior body 50, a plurality of electric wires 51 assemblies accommodated in an accommodation space 50a, an flexible-flat cable (FFC) 56, and a plate-shaped elastic body 58. As shown in Fig. 1, a first connector 24 and a second connector 25 are attached to both ends of the wire harness WH in the longitudinal direction.

The plurality of electric wires 51 assemblies are power supply lines or signal lines which connect the vehicle body side and the slide door side, and are wired so as to extend in a length direction so as to be aligned in a horizontal direction. As described above, at least a partial section of the electric wires 51 assemblies in the length direction is repeatedly bent in the horizontal direction. In all or a part of the bent section in the electric wires 51 assemblies, a plurality of electric wires are divided into a plurality of groups, and is bundled with a tape, a resin band, or the like for each group. Accordingly, at least a part of the plurality of electric wires 51 assemblies in the length direction are formed as a plurality of electric wire bundles 52. When the electric wires 51 are bound and bundled, a cross-sectional size and variety of the electric wires 51 can be appropriately selected according to an application. In addition, as described above, a range in which the electric wire bundles 52 are formed may be an entire length of a range in which the exterior body 50 exists, may be an entire length of the bent portion of the wire harness WH, or may be a part of the length of the bent portion.

A shape of a cross section of each of the electric wire bundles 52 changes depending on a position of each electric wire, the thickness of each electric wire, a degree of twist of each electric wire, or the like, but in the present specification, for convenience, a size of the cross section is represented by an outer diameter, which is regarded as a perfect circle or a shape close to the perfect circle.

The exterior body 50 is a hollow tubular body having a rectangular cross section having a flexibility which accommodates and protects at least the bent section of the plurality of electric wires 51 assemblies, and restricts a bent direction of each of the electric wires 51. Here, as the exterior body 50, for example, a corrugated tube having a bellows shape made of resin is used. The exterior body 50 in the present embodiment is configured to have a length which covers substantially the entire electric wires 51 assemblies in the length direction except for both ends thereof in the length direction. The exterior body 50 includes the accommodation space 50a which accommodates the plurality of bundled electric wire bundles 52, the FFC 56, and the plate-shaped elastic body 58, and in a state of accommodating them, can be bendable in the horizontal direction orthogonal to a vertical direction and the longitudinal direction.

The FFC 56 is a flat electrical connection member (circuit body) having a flexibility, and is provided as a power supply line or a signal line which connects the vehicle body side and the slide door side. The wire harness WH according to the present embodiment includes a plurality of FFCs. The plurality of FFCs are laminated in a thickness direction.

The plate-shaped elastic body 58 is a member for improving a bending stability of the wire harness WH, and has a curved cross-sectional shape orthogonal to an axial direction of the FFC 56. The cross-sectional shape of the plate-shaped elastic body 58 is a curved shape projecting toward one side in a plate thickness direction. The plate-shaped elastic body 58 is configured to generate a restoring force which restores to the above-described curved shape. The wire harness WH according to the present embodiment includes a plurality of plate-shaped elastic bodies 58. The plurality of plate-shaped elastic bodies 58 are overlapped with each other with convex surfaces facing a same side.

The plate-shaped elastic body 58 and the FFC 56 are accommodated inside the accommodation space 50a (the rectangular cross section) of the exterior body 50 so as to be close to one side in the horizontal direction. In addition to the electric wires 51 assemblies, the plate-shaped elastic body 58 and the FFC 56 are accommodated in the accommodation space 50a of the exterior body 50. Therefore, in the accommodation space 50a of the exterior body 50, a remaining area (space) other than a space in which members other than the electric wires 51 assemblies are accommodated is defined as an accommodation area 50b of the electric wire bundles 52.

A cross-sectional shape of the accommodation area 50b of the electric wire bundles 52 secured in the accommodation space 50a of the exterior body 50 is vertically long rectangular shape in an upper-lower direction. Here, an inner width dimension in the horizontal direction of the accommodation area 50b having a rectangular cross section is defined as A.

The smallest diameter among the outer diameters of the plurality of electric wire bundles 52 is defined as B. A value of the outer diameter B of the electric wire bundle 52B having the smallest diameter and a value of the inner width dimension A of the accommodation area 50b are set so as to satisfy the following relationship (1).

$$B > (A / 2) \quad (1)$$

In addition to the electric wire bundles 52, a single electric wire 53 which is not bundled is accommodated in the accommodation area 50b of the electric wire bundles 52 in the accommodation space 50a. When an outer diameter of the single electric wire 53 is defined as C, and the largest diameter in the outer diameters of the plurality of electric wire bundles 52 is defined as D, a values of C with respect to values of A, B, and D are set so as to satisfy the following relationship (2).

$$C > B \text{ or } C < (A - D) \quad (2)$$

According to the above configuration, in the accommodation area 50b of the electric wire bundle 52 in the accommodation space 50a of the exterior body 50, the two electric wire bundles 52 are not arranged side by side in the horizontal direction. For example, a width in a case where the two electric wire bundles having the same minimum diameter B are arranged side by side in the horizontal direction is 2B. On the other hand, the above condition "B > (A / 2)" is rewritten into "2B > A". That is, the inner width dimension A of the accommodation area 50b of the electric wire bundles 52 in the accommodation space 50a of the exterior body 50 is smaller than 2B.

Therefore, in the accommodation area 50b, the two electric wire bundles 52B having the smallest diameter B cannot be arranged side by side. Even if there are the two electric wire bundles 52B having the smallest diameter B, they cannot be arranged side by side, and thus other electric wire bundles 52 having a larger diameter cannot be arranged side by side. That is, regardless of a size of the diameter, the two electric wire bundles 52 are not arranged side by side in the horizontal direction. As shown in Fig. 4, even if the electric wire bundles 52 are concentrated in a lower area due to its own weight, the electric wire bundles 52 are not arranged side by side but are arranged in the vertical direction so as to be piled up. Therefore, when the exterior body 50 is bent in the horizontal direction, the electric wire bundle 52 and the electric wire bundle 52 are not entangled with each other, so that a bending resistance is not increased. In a case where the two electric wire bundles 52 are arranged side by side, the electric wire bundle 52 and the electric wire bundle 52 may rub against each other at the time of bending, and a sliding resistance may increase due to friction, but such a problem is suppressed. In addition, since the diameter of each electric wire bundle 52 is reduced, degrees of freedom of the electric wires 51 in the exterior body 50 are increased. As a result, densely concentrate of electric wires 51 in the exterior body 50 can be avoided, the electric wires are easily bent, and a bending durability (the number of bending allowed to maintain a performance as the wire harness) is improved.

Since the electric wire bundles 52 are stacked in the exterior body 50, an inner dimension of the exterior body 50 can also be reduced. In addition, as in a wire harness WH-K in a comparative example of Fig. 5, when the electric wires 51 are accommodated in the exterior body 50 in a loose manner, the electric wires 51 are densely concentrated in a lower side due to its own weight, which may result in an increase in the bending resistance. However, in the wire harness WH according to the present embodiment, as shown in Fig. 4, since the electric wires 51 are stacked in the upper-lower direction, the electric wires 51 are bent with little resistance together with the exterior body 50 in a state where the electric wires 51 are dispersed. In addition, at a stage of assembling the electric wires 51 to the exterior body 50, since the electric wires 51 can be accommodated in the exterior body 50 in a unit of the electric wire bundles 52, a work can be facilitated.

As described above, even when the unbundled single electric wire 53 is mixed with the electric wire bundles 52, a bendability of the electric wire 53 can be kept good by satisfying the above-described condition (2).

From the above, it is possible to improve the bending durability of the wire harness WH with an exterior body wired between the body and the slide door.

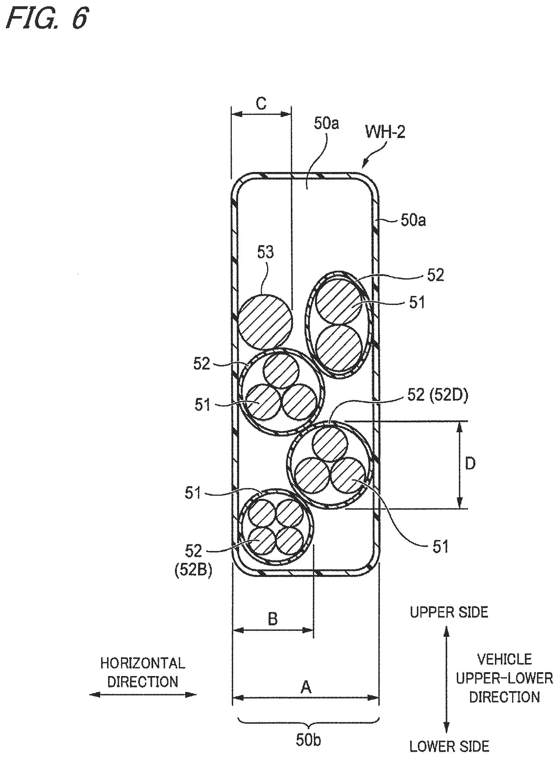

As in another embodiment of Fig. 6, a wire harness WH-2 may be configured by accommodating only the electric wires 51 assemblies without accommodating the FFC 56 and the plate-shaped elastic body 58 in the exterior body 50. In this case, the entire accommodation space 50a of the exterior body 50 becomes the accommodation area 50b of the electric wire bundles 52. Therefore, an inner width dimension of the accommodation space 50a is A.

Although the corrugated tube is illustrated as the exterior body 50 in the above-described embodiment, a member other than the corrugated tube may be used as long as the member is bendable in a state where the electric wire bundles 52 are accommodated therein.

A wiring position of the wire harness WH is not particularly limited to a sliding door type entrance. The wiring position may be any position where the wire harness WH is required to be bent.

Here, characteristics of the wire harness with an exterior body and the wiring structure thereof according to the embodiments of the present invention described above will be briefly summarized in the following [1] to [3], respectively.

[1] A wire harness (WH, WH-2) with an exterior body including:

a plurality of electric wires (51) assemblies, which are formed by a plurality of electric wires (51) as a plurality of electric wire bundles (52), obtained by repeatedly bending at least a part of the electric wires in a length direction in a predetermined direction (horizontal direction), and dividing the plurality of electric wires into a plurality of groups and bundling each group, in at least a part of the bent section; and a hollow tubular exterior body (50) having an accommodation space (50a) which accommodates at least the bent section of the plurality of electric wires (51) assemblies, and having a flexibility which is bendable in the predetermined direction (horizontal direction),

wherein when an inner width dimension in the predetermined direction (horizontal direction) of an accommodation area (50b) of the electric wire bundles (52) is defined as A, and the smallest diameter among the outer diameters of the plurality of electric wire bundles (52) is defined as B, in a cross section orthogonal to a longitudinal direction of the accommodation space (50a) of the exterior body (50), A and B satisfy the following relationship

$$B > (A / 2).$$

[2] The wire harness (WH, WH-2) with an exterior body according to the above [1], wherein in the accommodation area (50b) of the electric wire bundles (52) in the accommodation space (50a), a single electric wire (53) is further accommodated, and when an outer diameter of the single electric wire (53) is defined as C, and the largest diameter among the outer diameters of the plurality of electric wire bundles (52) is defined as D, the following relationship is satisfied

$$C < (A - D).$$

[3] A wiring structure for the wire harness (WH, WH-2) with an exterior body, wherein one end of the wire harness (WH, WH-2) with an exterior body according to the above [1] or [2] in the longitudinal direction is connected to a holding portion [3] on a body side of a vehicle, and the other end thereof is connected to a holding portion (2) on a slide door (5) side which opens/closes an opening portion of the vehicle.

## Claims

1. A wire harness with an exterior body comprising:

a plurality of electric wires assemblies, which are formed by a plurality of electric wires as a plurality of electric wire bundles, obtained by repeatedly bending at least a part of the electric wires in a length direction in a predetermined direction, and dividing the plurality of electric wires into a plurality of groups and bundling each group, in at least a part of the bent section; and a hollow tubular exterior body having an accommodation space which accommodates at least the bent section of the plurality of electric wires assemblies, and having a flexibility which is bendable in the predetermined direction, wherein when an inner width dimension in the predetermined direction of an accommodation area of the electric wire bundles is defined as A, and the smallest diameter among the outer diameters of the plurality of electric wire bundles is defined as B, in a cross section orthogonal to a longitudinal direction of the accommodation space of the exterior body, A and B satisfy the following relationship

$$B > (A / 2).$$

2. The wire harness with an exterior body according to claim 1, wherein in the accommodation area of the electric wire bundles in the accommodation space, a single electric wire is further accommodated, and when an outer diameter of the single electric wire is defined as C, and the largest diameter among the outer diameters of the plurality of electric wire bundles is defined as D, the following relationship is satisfied

$$C < (A - D).$$

3. A wiring structure for a wire harness with an exterior body,
wherein one end of the wire harness with an exterior body according to claim 1 or 2 in the longitudinal direction is connected to a holding portion on a body side of a vehicle, and the other end thereof is connected to a holding portion on a slide door side which opens/closes an opening portion of the vehicle.

FIG. 1

# FIG. 2

# FIG. 3

(a)

(FULLY OPEN)

2

(b)

(HALF OPEN)

2

(c)

(FULLY CLOSED)

2

WH

W

W

WH

DOOR SIDE

VEHICLE WIDTH
DIRECTION

VEHICLE BODY
CENTER SIDE

WH

WH

3

VEHICLE FRONT-REAR
DIRECTION

REAR SIDE ◄─────► FRONT SIDE

EP 3 617 005 A1

## FIG. 4

W-W

FIG. 5

COMPARATIVE EXAMPLE

## FIG. 6

FIG. 7A

(FULLY OPEN)
505
502
500
501

FIG. 7B

(HALF OPEN)
505
502
500
501

FIG. 7C

(FULLY CLOSED)
500
505
502
501

FIG. 8

FIG. 9

Europäisches
Patentamt

European
Patent Office

Office européen
des brevets

# EUROPEAN SEARCH REPORT

Application Number

EP 19 18 8224

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2014/203864 A1 (SUMITOMO WIRING SYSTEMS [JP]; TOYOTA AUTO BODY CO LTD [JP] ET AL.) 24 December 2014 (2014-12-24) * abstract; figures 1-3 * * paragraphs [0036], [0037] * | 1-3 | INV. B60R16/027 B60R16/02 H02G11/00 |
| A,D | JP 6 216629 B2 (YAZAKI CORP) 18 October 2017 (2017-10-18) * abstract; figures 1,2,4 * | 1-3 | |
| A | US 2006/038088 A1 (DODSON ROBERT T [US]) 23 February 2006 (2006-02-23) * abstract; figure 5 * * paragraphs [0017], [0018] * | 1,2 | |
| A | EP 2 203 036 A1 (FUJIKURA LTD [JP]) 30 June 2010 (2010-06-30) * abstract; figures 1A, 8C * * paragraphs [0063], [0067] * | 1-3 | |
| A | WO 2017/093313 A1 (TRW AUTOMOTIVE SAFETY SYSTEMS GMBH [DE]) 8 June 2017 (2017-06-08) * abstract; figures 7,11 * | 1,2 | TECHNICAL FIELDS SEARCHED (IPC) B60R H02G |
| A | EP 1 369 211 A1 (KUKA ROBOTER GMBH [DE]) 10 December 2003 (2003-12-10) * abstract; figure 2 * | 1,2 | |
| A | US 6 153 828 A (MURATA YUJI [JP] ET AL) 28 November 2000 (2000-11-28) * abstract; figures 3,4 * * column 4, line 39 - column 5, line 10 * | 1-3 | |

The present search report has been drawn up for all claims

| Place of search | Date of completion of the search | Examiner |
|---|---|---|
| Berlin | 21 January 2020 | Sleightholme-Albanis |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## EP 3 617 005 A1

## ANNEX TO THE EUROPEAN SEARCH REPORT
## ON EUROPEAN PATENT APPLICATION NO.

EP 19 18 8224

This annex lists the patent family members relating to the patent documents cited in the above-mentioned European search report.
The members are as contained in the European Patent Office EDP file on
The European Patent Office is in no way liable for these particulars which are merely given for the purpose of information.

21-01-2020

| Patent document cited in search report | | Publication date | Patent family member(s) | | Publication date |
|---|---|---|---|---|---|
| WO 2014203864 | A1 | 24-12-2014 | JP | 6132309 B2 | 24-05-2017 |
| | | | JP | 2015024802 A | 05-02-2015 |
| | | | WO | 2014203864 A1 | 24-12-2014 |
| JP 6216629 | B2 | 18-10-2017 | DE | 112014005411 T5 | 18-08-2016 |
| | | | JP | 6216629 B2 | 18-10-2017 |
| | | | JP | 2015101296 A | 04-06-2015 |
| | | | US | 2016264075 A1 | 15-09-2016 |
| | | | WO | 2015080028 A1 | 04-06-2015 |
| US 2006038088 | A1 | 23-02-2006 | BR | PI0503733 A | 27-04-2007 |
| | | | CA | 2515276 A1 | 23-02-2006 |
| | | | DE | 102005039649 A1 | 02-03-2006 |
| | | | FR | 2874370 A1 | 24-02-2006 |
| | | | GB | 2417469 A | 01-03-2006 |
| | | | JP | 2006089024 A | 06-04-2006 |
| | | | US | 2006038088 A1 | 23-02-2006 |
| EP 2203036 | A1 | 30-06-2010 | CN | 101843182 A | 22-09-2010 |
| | | | EP | 2203036 A1 | 30-06-2010 |
| | | | JP | 5227969 B2 | 03-07-2013 |
| | | | JP | WO2009057546 A1 | 10-03-2011 |
| | | | US | 2010243293 A1 | 30-09-2010 |
| | | | WO | 2009057546 A1 | 07-05-2009 |
| WO 2017093313 | A1 | 08-06-2017 | CN | 108290531 A | 17-07-2018 |
| | | | DE | 102015015450 B3 | 20-04-2017 |
| | | | EP | 3383709 A1 | 10-10-2018 |
| | | | JP | 2018535889 A | 06-12-2018 |
| | | | KR | 20180088827 A | 07-08-2018 |
| | | | US | 2018297544 A1 | 18-10-2018 |
| | | | WO | 2017093313 A1 | 08-06-2017 |
| EP 1369211 | A1 | 10-12-2003 | DE | 10224858 A1 | 15-01-2004 |
| | | | EP | 1369211 A1 | 10-12-2003 |
| | | | US | 2003226940 A1 | 11-12-2003 |
| US 6153828 | A | 28-11-2000 | DE | 19850452 A1 | 12-05-1999 |
| | | | US | 6153828 A | 28-11-2000 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018160843 A
- JP 6216629 B